# EUROPEAN PATENT APPLICATION

(11) **EP 2 172 832 A2**
(43) Date of publication of application: **07.04.2010**
(21) Application number: 09164333.8
(22) Date of filing: 01.07.2009
(51) Int. Cl.: G06F 3/023, H04M 1/00

(54) **Keypad display method of mobile terminal**

(30) Priority: 06.10.2008 KR 20080097753
(71) Applicant: LG Electronics Inc., Seoul 150-721 (KR)
(72) Inventor: Lee, Dong-Seok, Seoul (KR); Chung, Jin-Woo, Seoul (KR); Kim, Moon-Ju, Gyeonggi-Do (KR); Lee, Kun-Ho, Seoul (KR); Lee, Kang-E, Seoul (KR)
(74) Representative: Cabinet Plasseraud

(57) **Abstract**

A mobile terminal is provided including a keypad, a controller, and a display unit. The keypad is for inputting a search expression by sequentially entering characters. The controller is configured to search a memory to detect at least one expression that includes the search expression. The display unit is configured to display the keypad. The controller is configured to detect a set of characters. The detected set of characters include a character after each search expression in the detected at least one expression. The controller is configured to control the display unit to display the detected set of characters such that characters in the detected set of characters are emphasized over characters not in the detected set of characters.

## Description

### FIELD OF THE INVENTION

The present invention relates to a mobile terminal and, more particularly, to a keypad display method of a mobile terminal.

### DESCRIPTION OF THE RELATED ART

A mobile terminal is a portable device having one or more functions of voice and video communications, inputting/outputting information, and storing data.

Mobile terminals have increasingly been designed with various functions besides communication, such as capturing images and video via a camera, playing music files or video, playing games, and receiving broadcasts. As such, mobile terminals are now implemented in the form of comprehensive multimedia players.

Efforts are ongoing to support and increase the complicated functions of the multimedia players. Such efforts include improving and diversifying user interfaces to allow users to easily and conveniently manipulate functions of existing terminals.

### SUMMARY OF THE INVENTION

In an exemplary embodiment of the present invention, a mobile terminal is provided including a keypad, a controller, and a display unit. The keypad is for inputting a search expression by sequentially entering characters. The controller is configured to search a memory to detect at least one expression that includes the search expression. The display unit is configured to display the keypad. The controller is configured to detect a set of characters. The detected set of characters include a character after each search expression in the detected at least one expression. The controller is configured to control the display unit to display the detected set of characters such that characters in the detected set of characters are emphasized over characters not in the detected set of characters.

In an embodiment of the present invention, the controller is configured to control the display unit to deemphasize characters not in the detected set of characters.

In an embodiment of the present invention, the controller is configured to output a notification message when the detected set of characters is an empty set (i.e., the set of characters contains no characters).

In an embodiment of the present invention, the controller is configured to display the keypad with characters in the detected set of characters in an activated state and with characters not in the detected set of characters in a deactivated state.

In an embodiment of the present invention, the controller is configured to display the keypad with the characters in the detected set of characters rearranged on the keypad.

In an embodiment of the present invention, the controller is configured to display the keypad with characters in the detected set of characters with greater illumination than characters not in the detected set of characters.

In an embodiment of the present invention, the controller is configured to display the keypad with characters in the detected set of characters with a different font type, font size, font style, or font color than characters not in the detected set of characters.

In an embodiment of the present invention, the controller is configured to activate recognition on the keypad for characters in the detected set of characters and to deactivate recognition on the keypad for characters not in the detected set of characters. In another embodiment, the activated/deactivated recognition is a touch recognition.

In an embodiment of the present invention, the controller is configured to display characters in the detected set of characters in a selection window separate from the displayed keypad.

In an embodiment of the present invention, the controller is configured to detect a new set of characters and to display the keypad emphasizing the characters in the detected new set of characters upon each character of the search expression being sequentially input.

In an exemplary embodiment of the present invention, a keypad display method of a mobile terminal is provided. In the method, characters are sequentially received of a search expression via a keypad. A memory is searched to detect at least one expression that includes the search expression. A set of characters is detected. The detected set of characters include a character after each search expression in the detected at least one expression. The detected set of characters is displayed in the keypad such that characters in the detected set of characters are emphasized over characters not in the detected set of characters.

### BRIEF DESCRIPTION OF THE DRAWINGS

FIG. 1 is a schematic block diagram of a mobile terminal for implementing an embodiment of the present invention.

FIG. 2A is a front perspective view of a mobile terminal for implementing an embodiment of the present invention.

FIG. 2B is a rear perspective view of a mobile terminal for implementing an embodiment of the present invention.

FIG. 3A and FIG. 3B are front views of the mobile terminal for explaining operational states of the mobile terminal according to embodiments of the present invention.

FIG. 4 is a flow chart of a keypad display method according to an embodiment of the present invention.

FIG. 5 is a view showing a phone book search screen image and a keypad according to an embodiment of the present invention.

FIG. 6A, FIG. 6B, and FIG.6C show an example of a method for displaying detected characters on a keypad according to an embodiment of the present invention.

FIG. 7 shows searching of a phone book according to an embodiment of the present invention.

### DETAILED DESCRIPTION

The mobile terminal according to exemplary embodiments of the present invention will now be described with reference to the accompanying drawings. In the following description, usage of suffixes such as 'module', 'part' or 'unit' used for referring to elements is given merely to facilitate explanation of the present invention, without having any significant meaning by itself.

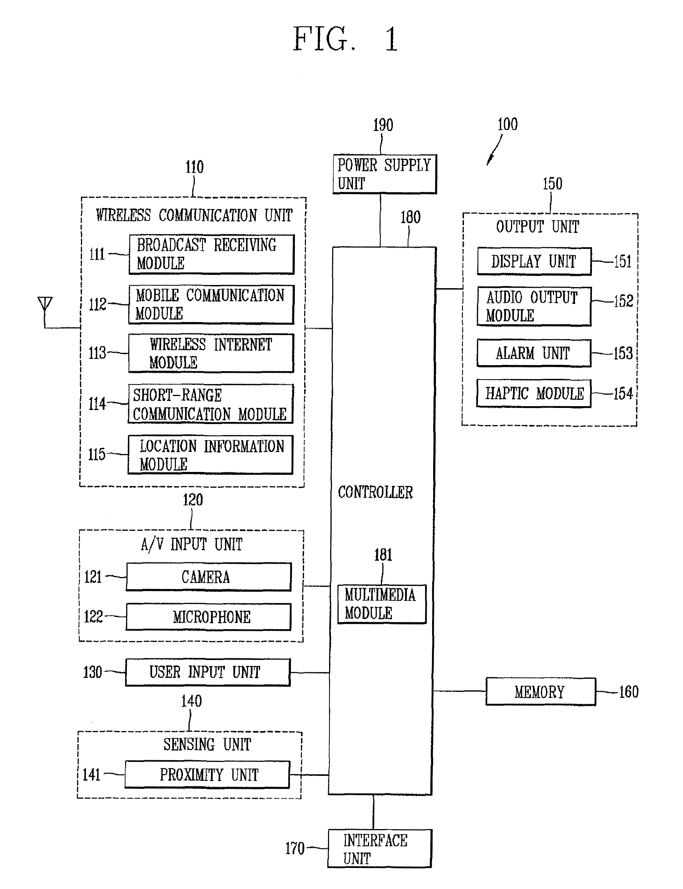

FIG. 1 is a block diagram of a mobile terminal 100 according to an embodiment of the present invention. Mobile terminals may be implemented in various forms.

For example, the mobile terminal described in the present invention may apply to mobile phones, smart phones, notebook computers, digital broadcast terminals, PDAs (Personal Digital Assistants), PMPs (Portable Multimedia Players), or navigation devices. However, except for the case where the configuration according to embodiments of the present invention is applicable only to mobile terminals, it would be understood by a person in the art that the present invention can be also applicable to the fixed terminals such as digital TVs and desktop computers.

The following description is with respect to a mobile terminal. However, it would be understood by a person skilled in the art that the configuration according to the embodiments of the present invention can also be applicable to fixed terminals, except for any elements especially configured for a mobile purpose.

The mobile terminal 100 according to an embodiment of the present invention will now be described with reference to FIG. 1. The mobile terminal 100 may include a wireless communication unit 110, an A/V (Audio/Video) input unit 120, a user input unit 130, a sensing unit 140, an output unit 150, a memory 160, an interface unit 170, a controller 180, and a power supply unit 190.

FIG. 1 shows a mobile terminal 100 having various components. The components as shown in FIG. 1 are not a requirement, and greater or fewer components may alternatively be implemented.

The wireless communication unit 110 may include one or more components allowing radio communication between the mobile terminal 100 and a wireless communication system or a network in which the mobile terminal is located. For example, the wireless communication unit may include a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server via a broadcast channel.

The broadcast channel may include a satellite channel and/or a terrestrial channel. The broadcast management server may refer to a server that generates and transmits a broadcast signal and/or broadcast associated information or a server that receives a previously generated broadcast signal and/or broadcast associated information and transmits the signal/information to a terminal. The broadcast signal may include not only a TV broadcast signal, a radio broadcast signal, and a data broadcast signal, but also a broadcast signal obtained by combining a data broadcast signal with the TV or radio broadcast signal.

The broadcast associated information may be information related to a broadcast channel, a broadcast program, or a broadcast service provider. The broadcast associated information may be provided via a mobile communication network. In this case, the broadcast associated information may be received by the mobile communication module 112.

The broadcast associated information may exist in various forms. For example, it may exist in the form of an electronic program guide (EPG) of digital multimedia broadcasting (DMB), or an electronic service guide (ESG) of digital video broadcast-handheld (DVB-H).

The broadcast receiving module 111 may receive digital broadcast signals by using digital broadcast systems such as multimedia broadcasting-terrestrial (DMB-T), digital multimedia broadcasting-satellite (DMB-S), media forward link only (MediaFLO^{®}), digital video broadcast-handheld (DVB-H), or integrated services digital broadcast-terrestrial (ISDB-T). The broadcast receiving module 111 may be configured to be suitable for any other broadcast systems as well as the above-described digital broadcast systems. Broadcast signals and/or broadcast-associated information received via the broadcast receiving module 111 may be stored in the memory 160.

The mobile communication module 112 transmits and receives radio signals to and from at least one of a base station, an external terminal, or a server. Such radio signals may include a voice call signal, a video call signal, or various types of data according to text/multimedia message transmission and reception.

The wireless Internet module 113 refers to a module for a wireless Internet access. This module may be internally or externally coupled to the terminal. The wireless Internet technique may include a WLAN (Wireless LAN) (Wi-Fi), WiBro (Wireless broadband), WIMAX (World Interoperability for Microwave Access), or HSDPA (High Speed Downlink Packet Access).

The short-range communication module 114 refers to a module for short-range communication. Short range communication technologies such as Bluetooth®, radio frequency identification (RFID), infrared data association (IrDA), ultra-wideband (UWB), or ZigBee® may be used.

The location information module 115 is a module for checking or acquiring a location of the mobile terminal. A GPS (Global Positioning System) module is a typical example of the location information module 115.

With reference to FIG. 1, the A/V input unit 120 is configured to receive an audio or video signal. The A/V input unit 120 may include a camera 121 and a microphone 122. The camera 121 processes image frames of still pictures or video. The processed image frames may be displayed on a display unit 151.

The image frames processed by the camera 121 may be stored in the memory 160 or transmitted externally via the wireless communication unit 110. Two or more cameras 121 may be provided according to a usage environment.

The microphone 122 receives an external audio signal while in a phone call mode, a recording mode, or a voice recognition mode, and processes the signal into electrical audio data. The processed audio data may be converted for output into a format transmittable to a mobile communication base station via the mobile communication module 112 when in the phone call mode. The microphone 122 may include various types of noise canceling algorithms to cancel noise generated in the course of receiving and transmitting external audio signals.

The user input unit 130 generates input data to control an operation of the mobile terminal. The user input unit 130 may include a keypad, a dome switch, a touch pad (e.g., static pressure/capacitance), a jog wheel, and/or a jog switch.

The sensing unit 140 detects a current status of the mobile terminal 100 such as an opened or closed state, a location of the mobile terminal, a presence or absence of user contact with the mobile terminal, orientation of the mobile terminal, and/or an acceleration or deceleration movement of the mobile terminal. The sensing unit 140 generates a sensing signal for controlling the operation of the mobile terminal.

For example, when the mobile terminal 100 is a slide type mobile phone, the sensing unit 140 may sense whether the slide phone is opened or closed. In addition, the sensing unit 140 can detect whether the power supply unit 190 supplies power or whether the interface unit 170 is coupled with an external device.

The sensing unit 140 may include a proximity unit/sensor 141. The proximity unit 141 will be described in relation to a touch screen.

The interface unit 170 serves as an interface by which at least one external device may be connected with the mobile terminal 100. The interface unit 170 may be used to receive inputs (e.g., data, information, power) from an external device and transfer the received inputs to one or more elements within the mobile terminal 100 or may be used to transfer data between the mobile terminal and an external device.

For example, the external devices may include wired or wireless headset ports, an external power supply (or battery charger) ports, wired or wireless data ports, memory card ports, ports for connecting a device having an identification module, audio input/output (I/O) ports, video I/O ports, or earphone ports. The identification module may be a memory chip (or other element with memory or storage capabilities) that stores various information for authenticating a user's authority for using the mobile terminal 100 and may include a user identity module (UIM), a subscriber identity module (SIM), and/or a universal subscriber identity module (USIM).

In addition, the device having the identification module (hereinafter, referred to as the 'identifying device') may take the form of a smart card. Accordingly, the identifying device may be connected with the mobile terminal 100 via a port or other connection means.

When the mobile terminal 100 is connected with an external cradle, the interface unit 170 may serve as a conduit to allow power from the cradle to be supplied to the mobile terminal 100 or may serve as a conduit to allow various command signals input from the cradle to be transferred to the mobile terminal. Various command signals or power input from the cradle may operate as signals for recognizing when the mobile terminal 100 is properly mounted on the cradle.

The output unit 150 is configured to provide outputs in a visual, audible, and/or tactile manner such as an audio signal, a video signal, an alarm signal, or a vibration signal. The output unit 150 may include the display unit 151, an audio output module 152, an alarm unit 153, and a haptic module 154.

The display unit 151 may display information processed in the mobile terminal 100. For example, when the mobile terminal 100 is in a phone call mode, the display unit 151 may display a user interface (UI) or a graphic user interface (GUI) associated with a call or other communication (such as text messaging, multimedia file downloading). When the mobile terminal 100 is in a video call mode or image capturing mode, the display unit 151 may display a captured image and/or received image, a UI, or a GUI that shows videos or images and functions related thereto.

The display unit 151 may include at least one of a liquid crystal display (LCD), a thin film transistor-LCD (TFT-LCD), an organic light emitting diode (OLED) display, a flexible display, or a three-dimensional (3D) display. Some of the displays may be configured to be transparent or light transmissive to allow viewing of the exterior of the mobile terminal 100, which may be called transparent displays. A typical transparent display may be, for example, a transparent organic light emitting diode (THOLED) display.

A rear structure of the display unit 151 may also have the light transmissive structure. With such a structure, a user can view an object located behind the mobile terminal body via the region occupied by the display 151.

The mobile terminal 100 may include two or more display units 151 (or other display means) according to its embodiment. For example, a plurality of display units 151 may be disposed on one side separately or integrally or separately disposed on different sides of the mobile terminal 100.

When the display unit 151 and a sensor for detecting a touching operation (hereinafter, referred to as 'touch sensor') are overlaid in a layered manner (hereinafter, referred to as 'touch screen'), the display unit 151 may function as both an input device and an output device. The touch sensor may be in the form of a touch film, a touch sheet, or a touch pad.

The touch sensor may be configured to convert a pressure applied to a particular portion of the display unit 151 or a change in capacitance at a particular portion of the display unit 151 into an electrical input signal. The touch sensor may be configured to detect the pressure when a touch is applied, as well as a touched position or area.

When a touch with respect to the touch sensor is input, corresponding signal (signals) are transmitted to a touch controller. The touch controller processes the signal (signals) and transmits corresponding data to the controller 180. Thus, the controller 180 can recognize which portion of the display unit 151 has been touched.

With reference to FIG. 1, a proximity unit 141 may be disposed within the mobile terminal 100 and covered by the touch screen or located near the touch screen. The proximity unit 141 refers to one or more sensors for detecting the presence or absence of an object that approaches a certain detect surface or an object that exists nearby by using the force of electromagnetism or infrared rays without a mechanical contact. Thus, the proximity unit 141 has a longer life span compared with a contact type sensor and can be utilized for various purposes.

The proximity unit 141 may be a transmission type photo sensor, a direct reflection type photo sensor, a mirror-reflection type photo sensor, an RF oscillation type proximity sensor, a capacitance type proximity sensor, a magnetic proximity sensor, or an infrared proximity sensor. Although the proximity unit 141 is not mounted, when the touch screen is an electrostatic type touch screen, an approach of a pointer is detected based on a change in an electric field related to the approach of the pointer. In this case, the touch screen (touch sensor) may be classified as a proximity sensor.

In the following description, for the sake of brevity, recognition of the pointer positioned close to the touch screen without contact will be called a "proximity touch," while recognition of actual contact of the pointer on the touch screen will be called a "contact touch." When a proximity touch is recognized, the pointer is positioned to correspond vertically to the touch screen.

The proximity unit 141 detects a proximity touch and a proximity touch pattern (e.g., a proximity touch distance, a proximity touch speed, a proximity touch time, a proximity touch position, and/or a proximity touch movement state). Information corresponding to the detected proximity touch operation and the proximity touch pattern can be output to the touch screen.

The audio output module 152 may output audio data received from the wireless communication unit 110 or stored in the memory 160 in a call signal reception mode, a call mode, a record mode, a voice recognition mode, and a broadcast reception mode. The audio output module 152 may provide audible outputs related to a particular function (e.g., a call signal reception sound, a message reception sound) performed in the mobile terminal 100. The audio output module 152 may include a receiver, a speaker, and a buzzer.

The alarm unit 153 outputs a signal for informing about an occurrence of an event of the mobile terminal 100. Events generated in the mobile terminal 100 may include call signal reception, message reception, key signal inputs, and a touch input. In addition to video or audio signals, the alarm unit 153 may output signals in a different manner, for example, to inform about an occurrence of an event. The video or audio signals may be also output via the audio output module 152, so the display unit 151 and the audio output module 152 may be classified as parts of the alarm unit 153.

A haptic module 154 generates various tactile effects the user may feel. A typical example of the tactile effects generated by the haptic module 154 is vibration. The strength and pattern of the tactile effects can be controlled. For example, different vibrations may be combined to be output or sequentially output.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, an electrostatic force, or an effect by reproducing the sense of cold and warmth using an element that can absorb or generate heat.

The haptic module 154 may be implemented to allow the user to feel a tactile effect through a muscle sensation such as in the fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a phonebook, messages, still images, video) that are input or output. In addition, the memory 160 may store data regarding various patterns of vibrations and audio signals output when a touch is input to the touch screen.

The memory 160 may include at least one type of storage medium including a Flash memory, a hard disk, a multimedia card micro type, a card-type memory (e.g., SD or DX memory), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. The mobile terminal 100 may be operated in relation to a web storage device that performs the storage function of the memory 160 over the Internet.

The controller 180 typically controls the general operations of the mobile terminal 100. For example, the controller 180 performs control and processing associated with voice calls, data communications, and video calls. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or electronic units designed to perform the functions described herein. In some cases, such embodiments may be implemented in the controller 180.

For software implementation, the embodiments such as procedures or functions may be implemented together with separate software modules that allow performing of at least one function or operation. Software codes can be implemented by a software application (or program) written in any suitable programming language. The software codes may be stored in the memory 160 and executed by the controller 180.

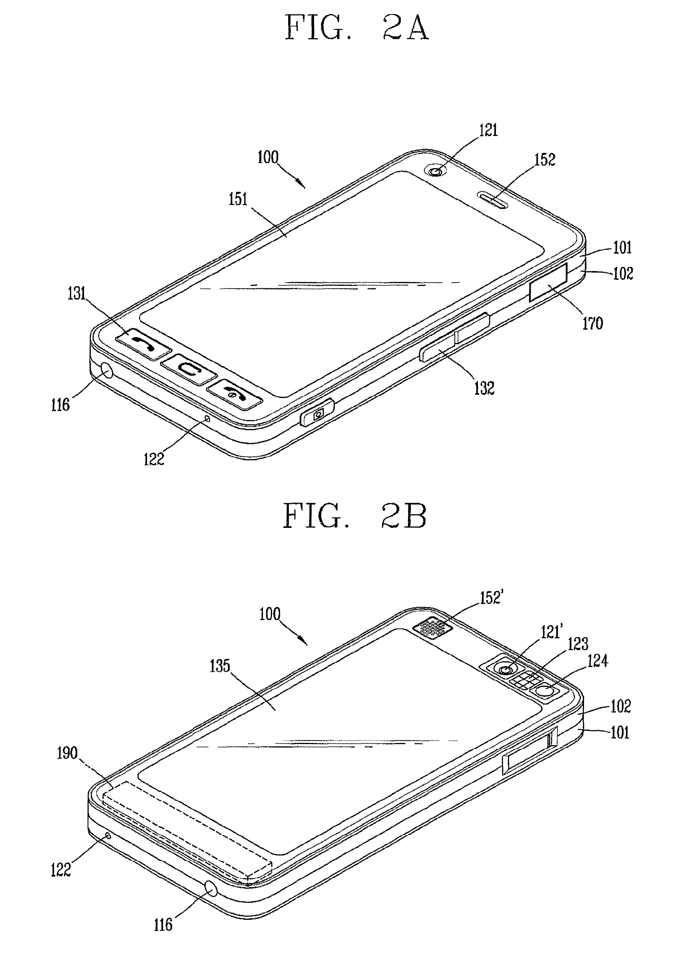

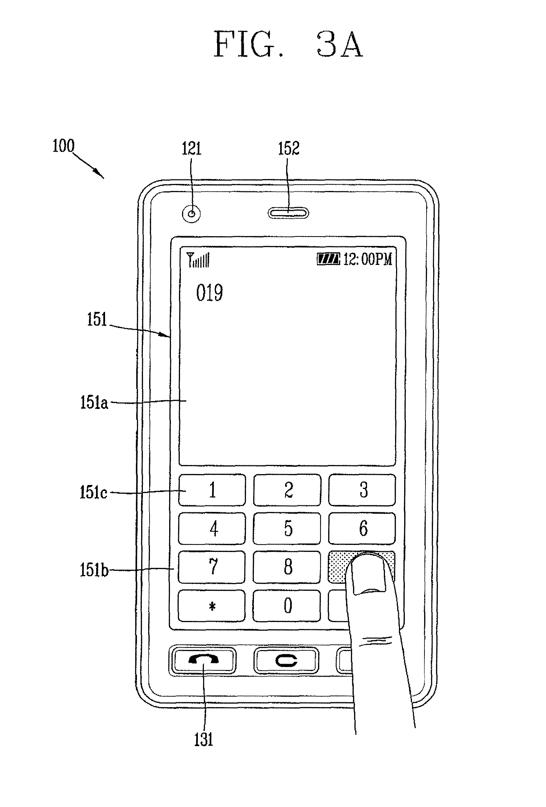

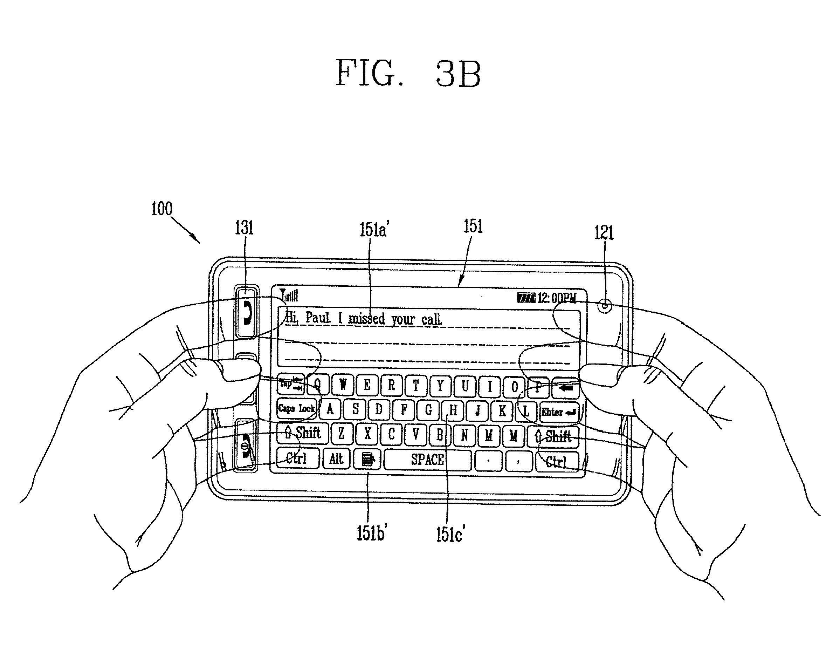

The internal elements of the mobile terminal 100 have been described from the perspective of its functions. Hereinafter, external elements of the mobile terminal 100 will be described from the perspective of their functions with reference to FIG. 2 and FIG. 3.

In the following description, among various types of mobile terminals 100 such as a folder type mobile terminal, a bar type mobile terminal, a swing type mobile terminal, and a slide type mobile terminal, the bar type mobile terminal will be used as an example. However, the present invention is not limited to the bar type mobile terminal and can be applicable to any types of mobile terminals.

FIG. 2A is a front perspective view of the mobile terminal 100 according to an embodiment of the present invention. The mobile terminal 100 has a bar type terminal body. However, the present invention is not limited thereto and may be applicable to a slide type mobile terminal, a folder type mobile terminal, a swing type mobile terminal, and a swivel type mobile terminal in which two or more bodies are combined to be relatively movable.

The body includes a case (or casing, housing, cover) constituting the external appearance. In this embodiment, the case may include a front case 101 and a rear case 102. Various electronic components are installed in the space between the front case 101 and the rear case 102. One or more intermediate cases may be additionally disposed between the front case 101 and the rear case 102. The cases may be formed by injection-molding a synthetic resin or may be made of a metallic material such as stainless steel (STS) or titanium (Ti).

The display unit 151, the audio output module 152, a camera 121, manipulation units 131 and 132 of the user input unit 130, a microphone 122, and the interface unit 170 may be disposed mainly on the front case 101.

The display unit 151 encompasses the greatest portion of a circumferential surface of the front case 101. The audio output module 152 and the camera 121 are disposed at a region adjacent to one end portion of the display unit 151, and the manipulation unit 131 and the microphone 122 are disposed at a region adjacent to another end portion. The manipulation unit 132 and the interface unit 170 may be disposed at the sides of the front case 101 and the rear case 102.

The user input unit 130 is manipulated to receive a command for controlling the operation of the mobile terminal 100 and may include a plurality of manipulation units 131 and 132. The manipulation units 131 and 132 may be generally referred to as a manipulating portion, and various methods and techniques can be employed for the manipulation portion so long as they can be operated by the user in a tactile manner.

Content input by the first and second manipulation units 131 and 132 can be variably set. For example, the first manipulation unit 131 may receive a command such as starting, ending, or scrolling, and the second manipulation unit 32 may receive a command such as controlling of the size of a sound outputted from the audio output module 152 or conversion into a touch recognition mode of the display unit 151.

FIG. 2B is a rear perspective view of the mobile terminal 100 as shown in FIG. 2A. With reference to FIG. 2B, a camera 121' may additionally be disposed on the rear surface of the terminal body, namely, on the rear case 102. The camera 121' may have an image capture direction which is substantially opposite to that of the camera 121 (see FIG. 2A), and have a different number of pixels than the camera 121.

For example, the camera 121 may have a smaller number of pixels to capture an image of the user's face and transmit such image to another party, and the camera 121' may have a larger number of pixels to capture an image of a general object and not immediately transmit the image in most cases. The cameras 121 and 121' may be installed on the terminal body such that they can be rotatable or popped up.

A flash 123 and a mirror 124 may be additionally disposed adjacent to the camera 121'. When an image of a subject is captured with the camera 121', the flash 123 illuminates the subject. The mirror 124 allows the user to see himself when he wants to capture his own image (i.e., self-image capturing) by using the camera 121'.

An audio output module 152' may be additionally disposed on the rear surface of the terminal body. The audio output module 152' may implement stereophonic sound functions in conjunction with the audio output module 152 (see FIG. 2A) and may be also used for implementing a speaker phone mode for call communication.

A broadcast signal receiving antenna 116 may be disposed at the side of the terminal body, in addition to an antenna that is used for mobile communications. The antenna 116 constituting a portion of the broadcast receiving module 111 (see FIG. 1) can also be configured to be retractable from the terminal body.

The power supply unit 190 for supplying power to the mobile terminal 100 is mounted on the terminal body. The power supply unit 190 may be installed within the terminal body or may be directly attached to or detached from the exterior of the terminal body.

A touch pad 135 for detecting a touch may be additionally mounted on the rear case 102. The touch pad 135 may be configured to be light transmissive like the display unit 151. In this case, when the display unit 151 is configured to output visual information from both sides thereof, the visual information may be recognized also via the touch pad 135. Alternatively, a display may be additionally mounted on the touch pad so that a touch screen may be disposed on the rear case 102.

The touch pad 135 is operated in association with the display unit 151 of the front case 101. The touch pad 135 may be disposed to be parallel on the rear side of the display unit 151. The touch pad 135 may have the same size as the display unit 151 or smaller.

The associated operation method of the display unit 151 and the touch pad 135 will now be described with reference to FIG. 3A and FIG. 3B. FIG. 3A and FIG. 3B are front views of the mobile terminal 100 for explaining an operation state of the mobile terminal according to the present invention.

Various types of visual information may be displayed on the display unit 151. The information may be displayed in the form of characters, numbers, symbols, graphics, and/or icons. In order to input the information, at least one of the characters, numbers, symbols, graphics, and icons is displayed in a certain arrangement so as to be implemented in the form of a keypad. Such a keypad may be called "soft key" keypad.

FIG. 3A shows receiving a touch applied to a soft key on the front surface of the terminal body. The display unit 151 may be operated as a whole region or may be divided into a plurality of regions and accordingly operated. In the latter case, the plurality of regions may be operated in association with each other.

For example, an output window 151 a and an input window 151 b may be displayed at upper and lower portions of the display unit 151, respectively. Soft keys 151c including numbers for inputting a phone number or other information are displayed on the input window 151 b. When the soft key 151c is touched, a number corresponding to the touched soft key is displayed on the output window 151a. When the first manipulation unit 131 is manipulated, a call connection with respect to a phone number displayed on the output window 151 a is attempted.

FIG. 3B shows receiving a touch applied to the soft key through the rear surface of the terminal body. If FIG. 3A shows a portrait in which the terminal body is disposed vertically, FIG. 3B shows a landscape in which the terminal body is disposed horizontally. The display unit 151 may be configured to convert an output screen image according to the disposition direction of the terminal body.

FIG. 3B shows an operation of a text input mode in the mobile terminal 100. An output window 151a' and an input window 151b' are displayed on the display unit 151. A plurality of soft keys 151c' including at least one of characters, symbols and numbers may be arranged on the input window 151 b'. The soft keys 151c' may be arranged in the form of QWERTY keys.

When the soft keys 151c' are touched through the touch pad 135 (see FIG. 2B), characters, numbers, or symbols, corresponding to the touched soft keys are displayed on the output window 151 a'. Compared with a touch input through the display unit 151, a touch input through the touch pad 135 can advantageously prevent the soft keys 151c' from being covered by user's fingers when touching is made. When the display unit 151 and the touch pad 135 are formed to be transparent, the user's fingers on the rear surface of the terminal body can be viewed through the display unit 151, so the touch input can be more accurately performed.

Besides the input methods presented in the above-described embodiments, the display unit 151 or the touch pad 135 may be configured to receive a touch through scrolling. The user may move a cursor or a pointer positioned on an entity, such as an icon, displayed on the display unit 151 by scrolling the display unit 151 or the touch pad 135. In addition, when the user moves his fingers on the display unit 151 or the touch pad 135, the path along which the user's fingers move may be visually displayed on the display unit 151. Such functionality would be useful in editing an image displayed on the display unit 151.

One function of the mobile terminal 100 may be executed in case where the display unit 151 (touch screen) and the touch pad 135 are touched together within a certain time range, such as when clamping the terminal body with the user's thumb and index finger. The one function may be, for example, activation or deactivation of the display unit 151 or the touch pad 135.

According to exemplary embodiments of the present invention, an apparatus and a method are provided to implement a mobile terminal 100 displaying only inputtable keys while searching is being performed. Exemplary embodiments of the present invention will now be described with reference to the accompanying drawings.

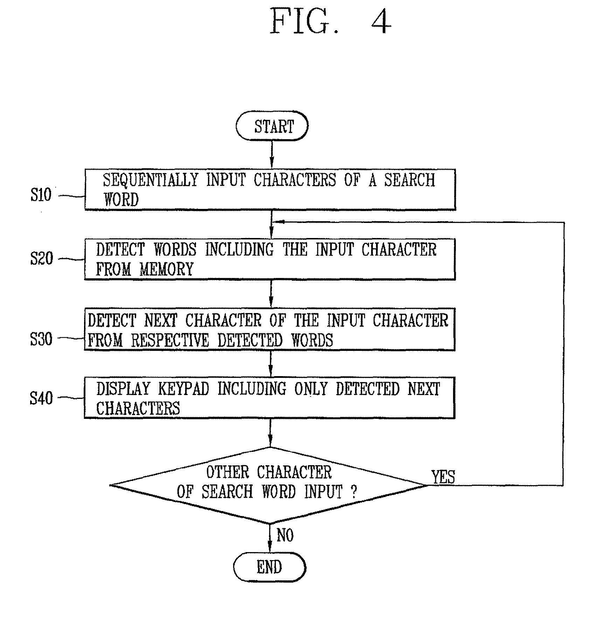

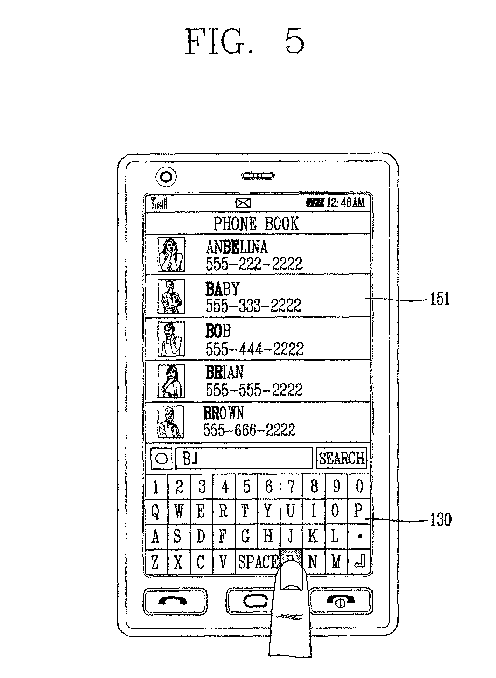

FIG. 4 is a flow chart of a keypad display method according to an embodiment of the present invention. FIG. 5 is a view showing a phone book search screen image and a keypad according to an embodiment of the present invention.

As shown in FIG. 5, the user inputs a particular name (e.g., 'Brian') to a phone book input window and detects a phone number stored with the corresponding name. In this case, in order to obtain the phone number stored with the particular name (Brian) (S10), when the user sequentially inputs the first character ('B') of the search word (Brian), the controller 180 starts searching the memory160 storing the data of the phone book for names including the inputted character (B).

The controller detects names (An**b**elina, **B**aby, **B**ob, **B**rian, **B**rown) including the character (B) and displays them on the display unit 151 in FIG. 5 (S20). Subsequently, the controller 180 detects the next character (Anb**e**lina, B**a**by, B**o**b, B**r**ian, B**r**own) of the inputted character (B) from the detected names (An**b**elina, **B**aby, **B**ob, **B**rian, **B**rown) (S30), and displays the detected characters (e, a, o, r) on the keypad 130 (S40).

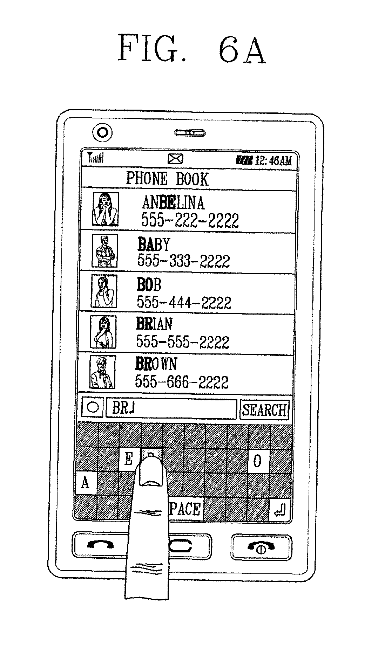

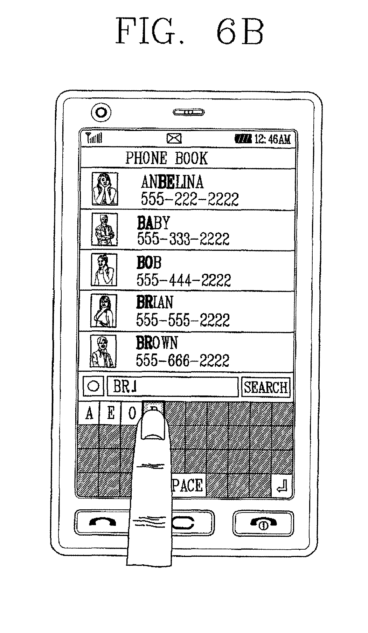

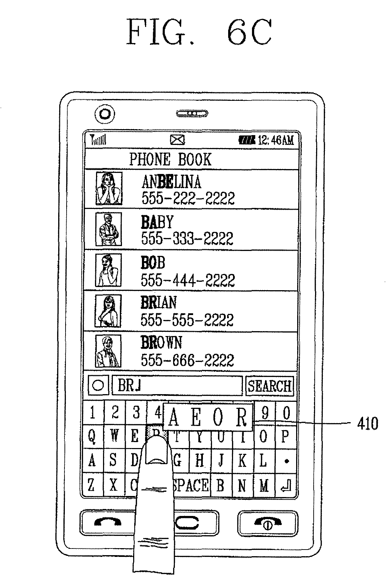

FIG. 6A, FIG. 6B, and FIG. 6C show a method for displaying detected characters on a keypad. The keypads of each drawing are merely illustrative, and the forms and types of the keypads according to the present invention are not limited.

FIG. 6A illustrates a keypad on which only the detected characters (e, a, o, r) are activated. In the embodiment shown in FIG. 6A, when the next characters (Anb**e**lina, B**a**by, B**o**b, B**r**ian, B**r**own) following the input character (B) are detected in step S30, the controller 180 emphasizes keys of the detected characters, while deemphasizing the other remaining character keys. The method for emphasizing the character keys may include increasing the illumination of light emitting elements of the emphasized character keys in order for the user to recognize them, displaying the emphasized character keys such that the colors of the emphasized character keys may be discriminated from the deemphasized character keys, displaying the emphasized character keys such that the font (type, size, style such as italic, bold, or underlined) of the emphasized character keys may be discriminated from the deemphasized character keys, not displaying the deemphasized character keys on the screen or cutting off power applied to corresponding light emitting elements, or preventing a touch recognition with respect to the deemphasized character keys.

FIG. 6B illustrates a new key pad including only the detected characters (e, a, o, r). In the embodiment shown in FIG. 6B, when the next characters (Anb**e**lina, B**a**by, B**o**b, B**r**ian, B**r**own) following the input character (B) are detected, the controller 180 re-arranges the detected character keys, and displays a keypad including only the character keys (a, e, o, r).

FIG. 6C illustrates a keypad displaying an additional character key selection window. In the embodiment shown in FIG. 6C, when the next characters (Anbelina, B**a**by, B**o**b, B**r**ian, Brown) following the input character (B) are detected, the controller 180 generates a certain selection window 410 at one portion of the keypad, and displays the detected characters (e, a, o, r).

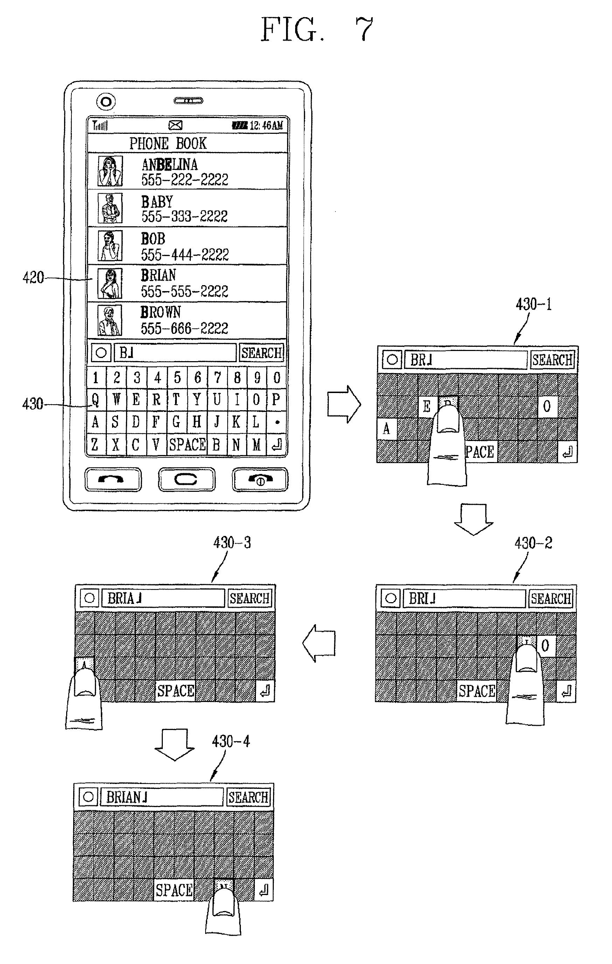

FIG. 7 shows searching of a phone book according to an embodiment of the present invention. As shown in FIG. 7, when the first character 'B' of the search word (Brian) is input via the keypad 130 on a second display region 430, the controller 180 displays names (Anbelina, **B**aby, **B**ob, **B**rian, **B**rown) including the character 'B' on a first display region 420.

The controller detects the next characters (An**b**elina, B**a**by, B**o**b, B**r**ian, B**r**own) of the character 'B' from the names (An**b**elina, **B**aby, **B**ob, **B**rian, **B**rown) detected with character 'B', and activates the corresponding character keys (e, a, o, r) of the keypad 130. The keypad 130 with only the character keys (e, a, o, r) activated is displayed on a second display region 430-1.

Thereafter, when the second character 'r' of the search word (Brian) is input, the controller 180 displays only the names (**B**rian, **B**rown) including the expression 'Br' on the first display region 420.

The controller 180 detects the characters 'i' and 'o' (Brian, Brown) following the expression 'Br' from the names (**B**rian, **B**rown) detected with the expression, and activates the corresponding character keys (i, o) of the keypad 130. The new keypad 130 with only the character keys 'i' and 'o' activated is displayed on the second display region 430-2.

When the third character 'i' of the search word (Brian) is input, the controller 180 displays only the name (**B**rian) including the expression 'Bri' on the first display region 420.

The controller detects the character (Bri**a**n) following the expression 'Bri' from the name (**B**rian) detected with the expression and activates a corresponding character key (a) of the keypad 130. The new keypad 130 with only the character key 'a' activated is displayed.

After the characters up to `i' are input, only information regarding 'Brian' is displayed on the first display region 420. Through the search result displayed on the first display region 420, the user can recognize that 'Brian' is the only name including the expression/characters 'Bri' in the phone book.

If the user inputs the fourth character 'a' (430-3) and the fifth character 'n' (430-4) of the search word/expression (Brian), the keypad 130 with every character key deactivated is displayed on the second display region. Subsequently, the user cannot input characters any more via the keypad 130.

In step S30, if a character following the input character 'n' is not detected, namely, when every character key of the keypad 130 is deactivated, the controller 180 outputs a notification message (e.g., a beep sound, vibration, a text message, an alarm lamp, or a blinking lamp) to allow the user to visually or audibly recognize that every character key has been deactivated.

In an exemplary embodiment of the present invention, if the search result displayed on the first display region 420 includes only one name, namely, even if the single name (Brian) is the only result, a corresponding notification message may be outputted for user recognition.

In the embodiments of the present invention, the above-described keypad display method can be implemented as codes that can be read by a computer in a program-recorded medium. The computer-readable medium may include any types of recording devices for storing data that can be read by a computer system.

In an exemplary embodiment, expressions input by a user are matched within expressions for each entry stored in memory. For example, if "Joe Bob," "Brian," and "Anbelina" are stored in the memory, an input of the letter "b" would match with "Joe **B**o**b**," "**B**rian," and "An**b**elina."

In another exemplary embodiment, expressions input by a user are matched with the beginning of distinct expressions for each entry stored in memory. For example, if "Joe Bob," "Brian," and "Anbelina" are stored in the memory, an input of the letter "b" would match with "Joe **B**ob" and "**B**rian."

In yet another exemplary embodiment, expressions input by a user are matched with the first expression for each entry stored in memory. For example, if "Joe Bob," "Brian," and "Anbelina" are stored in the memory, an input of the letter "b" would match with "**B**rian" only. The way in which the method matches user-input expressions with expressions stored in memory may be user configured. The word "expression" as used herein includes words and includes collections of characters that would not be defined as a word (e.g., "a!1"). As used herein, the term "characters" includes letters, punctuation, numbers, symbols, icons, and other graphics.

The computer-readable medium includes various types of recording devices in which data read by a computer system is stored. The computer-readable medium may include a ROM, a RAM, a CD-ROM, a magnetic tape, a floppy disk, and/or an optical data storage device. The computer-readable medium also includes implementations in the form of carrier waves or signals (e.g., transmission via the Internet). The computer may include the controller 180 of the mobile terminal.

As described, the present invention implements the keypad for activating only character keys that can be input when searching is performed in various functions of the mobile terminal. Because the keypad displays only the character keys that can be input, an unnecessary input by the user can be prevented, and a search word desired to be searched by the user that has been stored in the terminal can be quickly and easily recognized.

While the invention has been described in terms of exemplary embodiments, it is to be understood that the words which have been used are words of description and not of limitation. As is understood by persons of ordinary skill in the art, a variety of modifications can be made without departing from the scope of the invention defined by the following claims, which should be given their fullest, fair scope.

## Claims

1. A mobile terminal comprising:
a keypad for inputting a search expression by sequentially entering characters;
a controller configured to search a memory to detect at least one expression that includes the search expression; and
a display unit configured to display the keypad,
wherein the controller is configured to detect a set of characters, the detected set of characters including a character after each search expression in the detected at least one expression,
wherein the controller is configured to control the display unit to display the detected set of characters such that characters in the detected set of characters are emphasized over characters not in the detected set of characters.

2. The mobile terminal of claim 1, wherein the controller is configured to control the display unit to deemphasize characters not in the detected set of characters, and to output a notification message when the detected set of characters is an empty set.

3. The mobile terminal of claim 1, wherein the controller is configured to display the keypad with characters in the detected set of characters in an activated state and with characters not in the detected set of characters in a deactivated state.

4. The mobile terminal of claim 3, wherein the controller is configured to display the keypad with the characters in the detected set of characters rearranged on the keypad.

5. The mobile terminal of claim 1, wherein the controller is configured to display the keypad with characters in the detected set of characters with a different font type, font size, font style, font color, or greater illumination than characters not in the detected set of characters.

6. The mobile terminal of claim 1, wherein the controller is configured to activate recognition on the keypad for characters in the detected set of characters and to deactivate recognition on the keypad for characters not in the detected set of characters.

7. The mobile terminal of claim 1, wherein the controller is configured to display characters in the detected set of characters in a selection window separate from the displayed keypad.

8. The mobile terminal of claim 1, wherein the controller is configured to detect a new set of characters and to display the keypad emphasizing the characters in the detected new set of characters upon each character of the search expression being sequentially input.

9. A keypad display method of a mobile terminal, the method comprising:
sequentially receiving characters of a search expression via a keypad;
searching a memory to detect at least one expression that includes the search expression;
detecting a set of characters, the detected set of characters including a character after each search expression in the detected at least one expression; and
displaying the detected set of characters in the keypad such that characters in the detected set of characters are emphasized over characters not in the detected set of characters.

10. The method of claim 9, further comprising deemphasizing characters not in the detected set of characters.

11. The method of claim 9, further comprising outputting a notification message when the detected set of characters is an empty set.

12. The method of claim 9, further comprising displaying the keypad with characters in the detected set of characters in an activated state and with characters not in the detected set of characters in a deactivated state.

13. The method of claim 12, further comprising displaying the keypad with the characters in the detected set of characters rearranged on the keypad.

14. The method of claim 9, further comprising displaying the keypad with characters in the detected set of characters with a different font type, font size, font style, font color, or greater illumination than characters not in the detected set of characters.

15. The method of claim 9, further comprising activating recognition on the keypad for characters in the detected set of characters and deactivating recognition on the keypad for characters not in the detected set of characters.
